Europäisches Patentamt

European Patent Office

Office européen des brevets

(11) Publication number: **0 382 458**
**A1**

## (12) EUROPEAN PATENT APPLICATION

(21) Application number: 90301194.8

(22) Date of filing: 05.02.90

(51) Int. Cl.5: **B60P 7/13**

(30) Priority: 09.02.89 GB 8902875

(43) Date of publication of application:
16.08.90 Bulletin 90/33

(84) Designated Contracting States:
**BE DE FR GB IT NL SE**

(71) Applicant: **GEORGE BLAIR PUBLIC LIMITED COMPANY**
**Pottery Lane**
**Forth Newcastle upon Tyne NE1 3RB(GB)**

(72) Inventor: **Reynard, Kenneth**
**The Den, 13D Croft Head**
**Thirsk, North Yorkshire(GB)**

(74) Representative: **Sanderson, Michael John et al**
**MEWBURN ELLIS 2 Cursitor Street**
**London EC4A 1BQ(GB)**

(54) Means for securing a container to a support surface.

(57) Means for securing a container, in particular a freight container provided with standard corner fittings (14) having apertures (10) formed in the lower walls (12) thereof, to a support surface comprises a housing (2) adapted to be secured to the support surface whereby the upper surface of the housing (2) forms a continuation of the support surface, and means (8,38) shaped to conform with the aperture (10) and be received therein to prevent lateral and longitudinal movement of the container relative to the housing (2). A hook member (18) is pivotally mounted in the housing (2) to be movable between an inoperative position disengaged from the container and an operative position extending through the aperture (10) in the lower wall (12) of the corner fitting (14) to co-operate with the wall (12) and to prevent upward movement of the container relative to the housing (2).

FIG. 3

# MEANS FOR SECURING A CONTAINER TO A SUPPORT SURFACE

This invention relates to means for securing containers to support surfaces, and has particular, though not exclusive, application to such means for releasably securing freight containers to movable or fixed base structures which may be trailers, railwagons. flatracks and the like.

Freight containers are produced in a series of standard sizes and are generally known as I.S.O. containers. These containers are provided with corner fittings each of which comprises a hollow, generally box-shaped component provided with apertures in some of the faces thereof for receiving therein releasable securing means. Hereinafter, any reference to 'corner fitting' is to be understood as referring to a corner fitting of the above-described type.

It is conventional practice to secure such freight containers to associated support surfaces, such as on trailers, railwagons, flatracks or other transportation means, using releasable securing devices commonly known as twistlocks.

More particularly, a twistlock normally comprises a body or housing the upper plate of which is provided with shear blocks adapted to protrude through the generally rectangular aperture in the bottom wall of the corner fitting when the corner fitting seats on the upper plate of the twistlock. The co-operation between the shear blocks and said aperture in the corner fitting resists relative lateral and longitudinal movement between the container and the twistlock.

The twistlock further includes a bolt member having a stem portion carrying a generally rectangular head portion, the stem portion extending through, and being rotatable in, the body member, and the head portion seating on the shear blocks to be received within the associated corner fitting. Rotation of the bolt member in the body member of the twistlock brings the head portion into a locking position within the corner fitting preventing vertical movement of the corner fitting relative to the twistlock.

The stem portion of the bolt member, and the bore of the twistlock body member through which the stem portion passes and in which the stem portion rotates, are of circular cross-section. Consequently, the ingress of mud, grit or other foreign material between the stem portion and the bore in the body member can cause difficulties in rotating the stem portion and can lead to eventual seizure of the bolt member with the body member.

It would be desirable to be able to provide means for securing a container or the like to a support surface which were self-cleaning and less prone to seizure than the known arrangements.

According to the present invention there is provided means for securing a container to a support surface, the container having an aperture formed in the lower wall thereof, the securing means comprising a housing adapted to be secured to the support surface whereby the upper surface of the housing substantially forms a continuation of said support surface, means conforming substantially with the shape of the aperture in the lower wall of the container for location in said aperture to prevent lateral and longitudinal movement of the container relative to the housing, and a hook member pivotally mounted in the housing to be movable between an inoperative position disengaged from the container and an operative position extending through the aperture in the lower wall of the container to co-operate with said wall and to prevent upward movement of the container relative to the housing.

The invention has particular application to the securing of I.S.O. freight containers provided with standard corner fittings to support surfaces, in which case said aperture is formed in the lower wall of a corner fitting.

In one embodiment of the invention, the securing means comprises a pair of spaced apart shear blocks on the upper surface of the housing and conforming substantially with the shape of the aperture for location in said aperture to prevent lateral and longitudinal movement of the container relative to the housing, the hook member being located between said shear blocks to be pivotal between an inoperative position within the peripheral envelope of said shear blocks and an operative position extending laterally beyond the shear blocks and overlying the lower wall of the corner fitting to prevent upward movement of the container relative to the housing.

In an alternative embodiment of the invention, the hook member, in its inoperative position, is located below the upper surface of the housing, the hook member including a body portion the peripheral envelope of which conforms substantially with the shape of the aperture in the lower wall of the corner fitting whereby, on pivotal movement of the hook member to its operative position, the body portion of the hook member is received within said aperture to co-operate therewith to prevent lateral and longitudinal movement of the container relative to the housing, the hook member further including a hook portion which, in the operative position of the hook member, overlies the lower wall of the corner fitting to prevent upward movement of the container relative to the housing.

Conveniently the hook member is pivotal through an intermediate loading position in which it projects above the upper surface of the housing and whereby the aperture in the lower wall of the corner fitting can be lowered thereover to locate the container accurately on the housing for subsequent securing by pivoting the hook member into its operative position.

In all cases it is preferred that the hook member includes abutment surfaces thereon which, with the hook member in its operative position, react against an internal wall of the housing to absorb upward forces on the hook member.

The hook member may be pivotal by means of a shaft projecting from the housing; which shaft may co-operate with the housing to determine the operative and the inoperative positions of the hook member. The shaft may be resiliently biased into locked positions associated with said operative and inoperative positions of the hook member.

The hook member may be pivoted manually or may have remote control means associated therewith which may be operated, for example, pneumatically, hydraulically or electrically.

By way of examples only, embodiments of the invention will now be described in greater detail with reference to the accompanying drawings of which:

Fig. 1 is a front view of a first securing means according to the invention with the hook member in its operative position;

Fig. 2 is a plan view from above of the means of Fig. 1;

Fig. 3 is a section on the line A-A in Fig. 1;

Fig. 4 is a front view of a second securing means according to the invention with the hook member in its operative position;

Fig. 5 is a plan view from above of the means of Fig. 4, and

Fig. 6 is a section on the line B-B in Fig. 4 but with the hook member in the intermediate loading position.

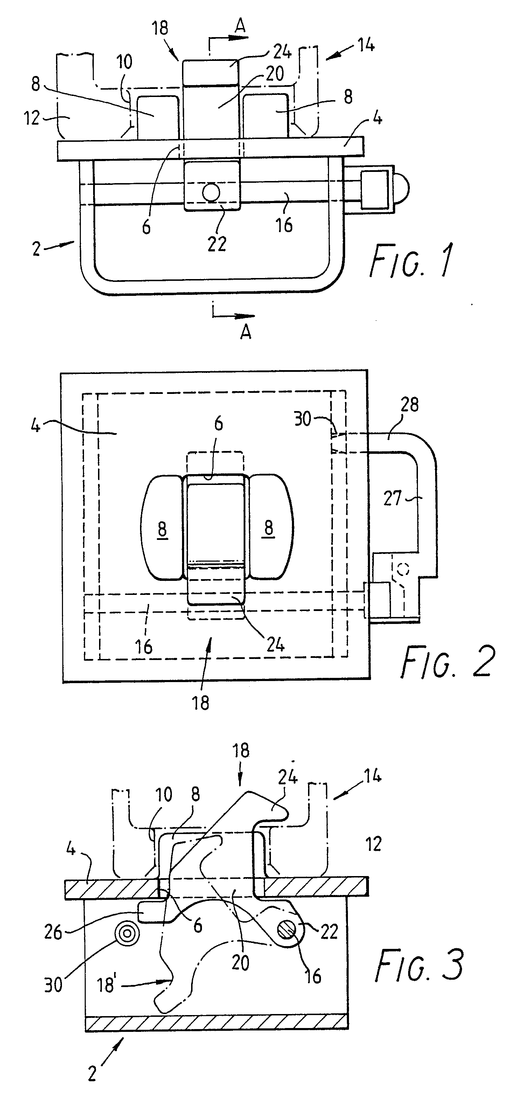

Referring to Figs. 1 to 3, the illustrated securing means comprises a housing indicated generally at 2 and including a top plate 4 through which is formed a generally rectangular slot 6.

A pair of upstanding shear blocks 8 are provided on the upper surface of the plate 4 one to each side of the slot 6, the peripheral envelope of said shear blocks in plan view conforming in shape with that of the aperture 10 in the lower wall 12 of a conventional I.S.O. corner fitting shown in part in dotted lines at 14.

Thus, on location of the corner fitting 14 on the top plate 4 of the housing 2, the shear blocks 8 are received within the aperture 10 to co-operate with the lower wall 12 of the corner fitting to prevent lateral and longitudinal movement of the associated container relative to the housing 2.

A shaft 16 extends through the housing 2 to be rotatable therein about its central longitudinal axis, the shaft 16 carrying a hook member indicated generally at 18 pivotal with the shaft 16.

The hook member 18 projects from the housing 2 through the slot 6 in the plate 4 to be located between the shear blocks 8, the hook member including a body portion 20 from which extend a leg portion 22 by which the hook member 18 is mounted on the shaft 16, a hook portion 24 and an abutment portion 26 best seen in Fig. 3.

The hook member 18 is pivotal by means of the shaft 16 between an inoperative position, shown in dotted lines at 18′ in Fig. 3 in which the hook portion 24 is located above the top plate 4 and between the shear blocks 8, and an operative position shown in full lines in the drawings in which the hook portion projects laterally beyond the confines of the shear blocks 8 to overlie the inner surface of the lower wall 12 of the corner fitting 14, again as best seen in Fig. 3.

Thus it will be appreciated that the hook portion 24 of the hook member 18 co-operates with the lower wall of the corner fitting to prevent upward movement of the container relative to the housing 2. In the operative position of the hook member and on the application of an upward force on the hook portion 24, the upper surface of the abutment portion 26 as well as a surface on the leg portion engage the underside of the top plate 4 to resist said upward movement-the mounting of the hook member 18 on the shaft 16 is such as to permit the necessary relative movement therebetween.

It will be appreciated that the configuration of the hook member together with the pivoting nature of the movement between the inoperative and operative positions thereof are such as to prevent any build-up of foreign matter in the region of the hook member which could interfere with or prevent said movement, the arrangement in effect being substantially self-cleaning.

Attached to an outer end of the shaft 16 is a lever arm 26 by which the shaft 16 is rotated, the lever arm 26 including a reflex portion 28 adapted to be received within one of two recesses in the side of the housing 2.

More particularly, the lever arm 26 is resiliently biased into the position shown in Fig. 2 in which the free end of the portion 28 is urged towards the side of the housing 2. With the hook member 18 in its inoperative position, the free end of the portion 28 of the lever arm 26 is located in a first recess in the housing 2 positively to locate the shaft 16 and attached hook member 18 in their inoperative positions.

Movement of the hook member to its operative position is effected by withdrawing the lever arm 26 against the resilient bias to disengage the reflex portion 28 from the first recess, and rotating the shaft 16 by means of the lever arm 26 until the hook member achieves its operative position, in which position the free end of the portion 28 of the lever arm 26 is resiliently urged into a second recess 30 in the housing 2 positively to locate the shaft 16 and attached hook member 18 in their operative positions.

The shaft 16 may be rotated manually, as by lever arm 26, or may be remotely controlled by means which may be, for example, pneumatically, hydraulically or electrically operated. Instead of being secured to the rotatable shaft 16, the hook member 18 could be pivotal on a fixed shaft, such an arrangement lending itself to automation.

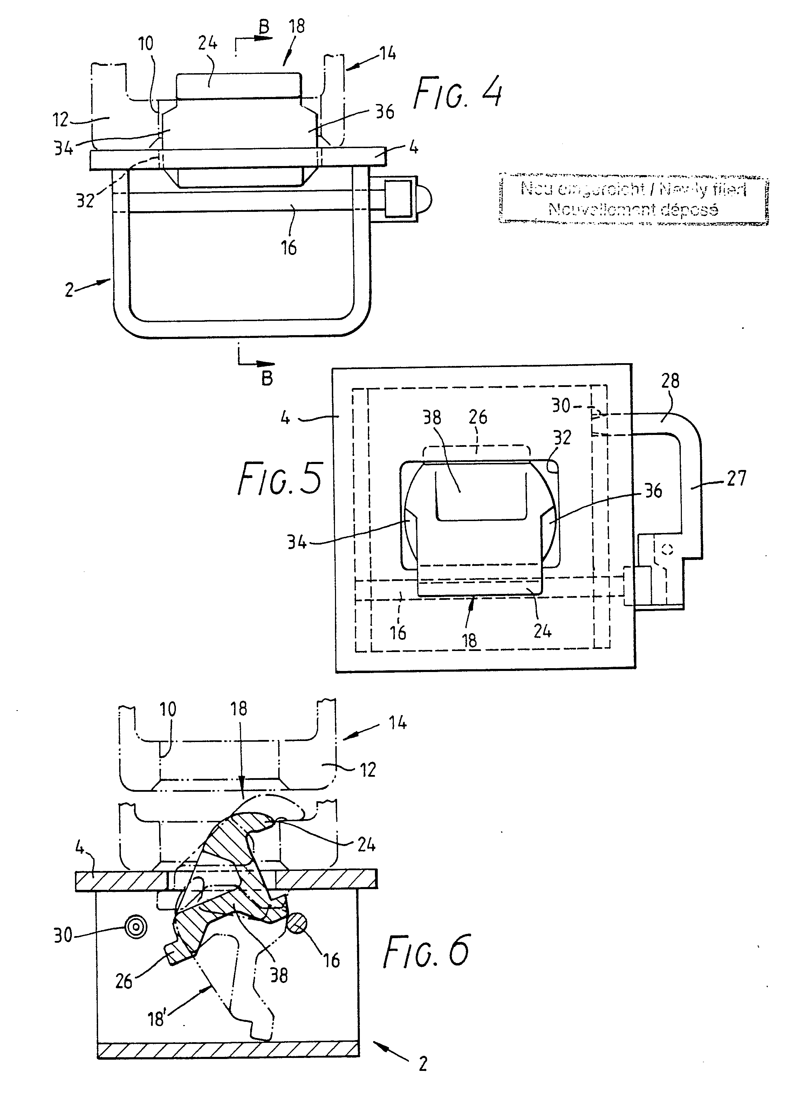

Figs. 4 to 6 illustrate an alternative embodiment of the invention in which parts equivalent to those in Figs. 1 to 3 are similarly referenced. However the embodiment of Figs. 4 to 6 is such as to provide a flat surface to the housing 2 when the hook member is in its inoperative position thus providing a continuous cargo surface on the associated trailer, railwagon, flatrack or the like.

More particularly, the shear blocks 8 of the first embodiment are incorporated in the hook member 18 itself which is fully retractable below the top plate 4 of the housing 2.

Referring to Figs. 4 to 6, the top plate has formed therein an elongate rectangular aperture 32 of a size approximately equal to that of the aperture 10 in the lower wall 12 of the corner fitting 14.

The hook member 18 secured to, to be pivotal with, the shaft 16 is of a length just less than the length of the aperture 32 and has an inoperative position shown in dotted lines at 18′ in Fig. 6 in which the hook member 18 is completely below the upper surface of the top plate 4 of the housing 2.

The hook member 18 includes opposed end walls 34,36 to either side of a central body portion 38 which conforms substantially with the end regions of the aperture 10 whereby, on pivoting the hook member 18 upwardly through the aperture 32 in the top plate 4 and into the aperture 10 in the lower wall 12 of the corner fitting 14, the hook member 18 co-operates with said aperture 32 to prevent lateral and longitudinal movement of the container relative to the housing 2.

In the fully displaced operative position of the hook member 18, a lip portion 24 thereof overlies the bottom wall 12 of the corner fitting 14 in the manner of the embodiment of Figs. 1 to 3, although said lip portion of the securing means of Figs. 4 to 6 is of greater axial extent.

In the intermediate loading position of the hook member 18 shown in full lines in Fig. 6, the hook member 18 is wholly within the lateral confines of the aperture 10 in the corner fitting 14 and serves to locate the corner fitting as it is lowered over the hook member 18 onto the housing 2, the profile of the hook member 18 guiding the corner fitting 14 into its desired position on the top plate 4.

Thus it will be appreciated that the hook member 18 itself serves to prevent lateral, longitudinal and upward movement of the container 14 relative to the housing 2 and also serves to locate the container accurately on the housing 2.

Again, the hook member 18 of the embodiment of Figs. 4 to 6 may be pivotal on a fixed shaft.

## Claims

1. Means for securing a container to a support surface, the container having an aperture (10) formed in the lower wall (12) thereof, the securing means comprising a housing (2) adapted to be secured to the support surface whereby the upper surface of the housing (2) substantially forms a continuation of said support surface, and means (8,38) conforming substantially with the shape of the aperture (10) in the lower wall (12) of the container for location in said aperture (10) to prevent lateral and longitudinal movement of the container relative to the housing (2), characterised by a hook member (18) pivotally mounted in the housing (2) to be movable between an inoperative position disengaged from the container and an operative position extending through the aperture (10) in the lower wall (12) of the container to co-operate with said wall (12) and to prevent upward movement of the container relative to the housing (2).

2. Means as claimed in claim 1 for securing a freight container provided with a standard corner fitting (14) to a support surface, the aperture (10) being formed in the lower wall (12) of the corner fitting (14).

3. Securing means as claimed in claim 2 in which the means conforming substantially with the shape of the aperture (10) in the lower wall (12) of the corner fitting (14) comprises a pair of spaced apart shear blocks (8) on the upper surface of the housing (2), the hook member (18) being located between said shear blocks (8) to be pivotal between an inoperative position wthin the peripheral envelope of said shear blocks (8) and an operative position extending laterally beyond the shear blocks (8) and overlying the lower wall (12) of the corner fitting (14) to prevent upward movement of the container relative to the housing (2).

4. Securing means as claimed in claim 2 in which the hook member (18), in its inoperative position, is located below the upper surface of the housing (2), the hook member (18) including a body portion (38) the peripheral envelope of which conforms substantially with the shape of the aperture (10) in the lower wall (12) of the corner fitting (14) whereby, on pivotal movement of the hook member (18) to its operative position, the body portion (38) of the hook member (18) is received within said aperture (10) to co-operate therewith to prevent lateral and longitudinal movement of the container relative to the housing (2), the hook member (18) further including a hook portion (24) which, in the operative position of the hook member (18), overlies the lower wall (12) of the corner fitting (14) to prevent upward movement of the container relative to the housing (2).

5. Securing means as claimed in claim 4 in which the hook member (18) is pivotal through an intermediate loading position in which it projects above the upper surface of the housing (2) and whereby the aperture (10) in the lower wall (12) of the corner fitting (14) can be lowered thereover to locate the container accurately on the housing (2) for subsequent securing by pivoting the hook member (18) into its operative position.

6. Securing means as claimed in any one of claims 1 to 5 in which the hook member (18) includes abutment surfaces thereon which, with the hook member (18) in its operative position, react against an internal wall of the housing (2) to absorb upward forces on the hook member (18).

7. Securing means as claimed in any one of claims 1 to 6 in which the hook member (18) is pivotal by means of a shaft (16) projecting from the housing (2), the shaft (16) co-operating with the housing (2) to determine the operative and inoperative positions of the hook member (18).

8. Securing means as claimed in claim 7 in which the shaft (16) is resiliently biased into locked positions associated with said operative and inoperative positions of the hook member (18).

9. Securing means as claimed in any one of claims 1 to 8 and including remote control means for pivoting the hook member (18), said remote control means being operated pneumatically, hydraulically or electrically.

FIG. 1

FIG. 2

FIG. 3

FIG. 4

FIG. 5

FIG. 6

## DOCUMENTS CONSIDERED TO BE RELEVANT

EP 90301194.8

| Category | Citation of document with indication, where appropriate, of relevant passages | Relevant to claim | CLASSIFICATION OF THE APPLICATION (Int Cl⁵) |
|---|---|---|---|
| X | DE - B2 - 2 060 840 (PRESTEL) <br> * Totality * <br> -- | 1,9 | B 60 P 7/13 |
| A | US - A - 4 382 735 (SYNOWIEC) <br> * Fig. 1-8 * <br> ---- | 1,2 | |

TECHNICAL FIELDS
SEARCHED (Int Cl⁵)

B 60 P
B 65 D
B 61 D

The present search report has been drawn up for all claims

| Place of search | Date of completion of the search | Examiner |
|---|---|---|
| VIENNA | 02-05-1990 | SCHMICKL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82